# EUROPEAN PATENT SPECIFICATION

(11) **EP 4 071 292 B1**
(45) Date of publication and mention of the grant of the patent: **31.07.2024**
(21) Application number: 22161025.6
(22) Date of filing: 09.03.2022
(51) Int. Cl.: D06F 39/12, B21D 25/00, B21D 28/02, B21D 28/24, B21D 28/26, B21D 35/00

(54) **A WASHING MACHINE AND A METHOD FOR MANUFACTURING A WASHING MACHINE**
WASCHMASCHINE UND VERFAHREN ZUM HERSTELLEN EINER WASCHMASCHINE
MACHINE À LAVER ET PROCÉDÉ DE FABRICATION D'UNE MACHINE À LAVER

(30) Priority: 07.04.2021 TR 202106171
(43) Date of publication of application: 12.10.2022
(73) Proprietor: BSH Hausgeräte GmbH, 81739 München (DE)
(72) Inventor: Atas, Onur, 34347 Istanbul (TR); Güleç, Koray, Tekirdag (TR); Koru, Serkan, 59850 Tekirdag (TR); Lopez Palacios, Carlos, 50730 El Burgo de Ebro (Zaragoza) (ES)

(56) References cited:
- CN-A- 106 702 670
- CN-A- 109 554 898
- CN-U- 213 708 849
- DE-A1- 4 412 546

## Description

### Technical Field

The present invention relates to a method for manufacturing a washing machine.

### Prior Art

Washing machines have a housing, which encloses the operating elements such as tub, drum, driving motor etc. In order to provide proper maintenance service to the interior elements and parts of the machine, the housing also comprise a maintenance opening which is detachable and re-attachable. The maintenance opening allows the user or the technician to access to the machine from the back, which is opposite of the front panel. Normally the opening is cut out from the back panel of the washing machine and this cut piece is thrown away. Then this opening is covered with another extra metal sheet, which corresponds to the size of the opening. This harms the manufacturer financially because of excess use of material. In addition, this process causes environmental damages as more material is thrown away rather than recycling or re-using of the parts.

The document CN106702670A discloses an inner cylinder rear cover for a dry-cleaning machine.

The document DE4412546A1 discloses a rounded chamber corner at a sheet metal housing for a domestic appliance.

The document CN109554898 discloses a top-openable front loading washing machine, comprising: a box body, wherein a receiving cavity having a top opening is defined in the box body, the box body is provided with a maintenance opening, and the edge of the maintenance opening is recessed into the receiving cavity; a maintenance cover plate releasably arranged at the maintenance opening and used for opening or closing the maintenance opening. The top-openable front loading washing machine has the advantages that the edge of the maintenance opening is recessed into the receiving cavity; after the maintenance cover plate is mounted, the maintenance cover plate is in the same horizontal plane with the part of the box body having the maintenance opening; it is prevented that the raised maintenance cover plate limits the placement of the top-openable front loading washing machine.

The invention provides an additional improvement, an additional advantage or an alternative to the prior art.

### Brief Description of the Invention

An object of the invention is to provide an economically effective manufacturing process for washing machines.

Another object of the invention is to provide a washing machine, which is produced by environmentally friendly manufacturing steps.

Furthermore, additional object of the invention is to provide a washing machine production process, which consumes less energy and requires less material for producing the washing machine.

In order to achieve the objects, the invention is a method for manufacturing a washing machine comprising the steps of:
- Punching asymmetric holes on the back panel of the washing machine
- Cutting out a maintenance cover from the back panel of the washing machine for providing a maintenance opening
- Extending the maintenance cover by using press expansion process for assembling to the washing machine
- Inverting the extended maintenance cover for covering the maintenance opening of the washing machine
- Pairing the asymmetric holes of the expanded maintenance cover to the connection points on the back panel.

Thus, an economical production process for manufacturing a washing machine is achieved. Instead of throwing away the maintenance cover as garbage or trash, reuse of the cover is provided. This allows the manufacturer to cut costs. Reusing the materials, which are to be thrown away, is also environmental friendly. It also provides sustainable and ecological manufacturing solution to the producer. By eliminating excess material usage, significant energy consumption is decreased.

In a possible embodiment, the connection of the maintenance cover to the back panel is provided by means of screwing. Thus, a robust and rigid connection of the maintenance cover to the housing of the washing machine is provided. Connection by means of screwing also allows the user or the technical service personnel to disassemble the maintenance cover easily and access to the interior of the machine. Moreover, the connection between the maintenance cover and the housing of the washing machine is realized in a simple and secure manner.

In a possible embodiment, at least three asymmetric holes are punched on the maintenance cover. In another possible embodiment of the invention, 3 to 12 asymmetric holes are punched on the maintenance cover. Thus, the manufacturer has variety of options to determine the number of asymmetric holes to be punched according to the firmness of the washing machine. Furthermore, the connection between the maintenance cover and the washing machine is enhanced with plurality of connection points.

In a possible embodiment of the invention, the asymmetric holes are punched at an equal distance to one another. Thus, the attachment of the maintenance cover to the back panel of the washing machine is secured in a distributed and balanced manner. During the intense washing spin cycles, such as squeezing process.

Furthermore, invention also relates to a washing machine, which is designed to be manufactured according to the invention or a possible embodiment of the invention.

In a possible embodiment of the invention, the asymmetric holes are any size and shape. Thus, the durability and the strength of the housing of the washing machine is provided. The manufacturer has variety of options according to the operating power of the machine.

In this context, with the indications "top", "bottom", "front", "rear", "horizontal", "vertical", "upward", "downward", "inner", "outer", "inward", "outward" etc. the positions and orientations given for intended use and intended arrangement of the washing machine and for a user then standing in front of the washing machine in a closed position and viewing in the direction of the device are indicated.

Each possible embodiment disclosed in this text can be combined with the other possible embodiments disclosed in this text if there is no any technical constraint.

### Explanation of Figures

The figures, whose brief explanations are herewith provided, are solely intended for providing a better understanding of the present invention and are as such not intended to define the scope of protection or the context in which said scope is to be interpreted in the absence of the description.
Fig. 1 is an isometric view of the washing machine according to the present invention.
Fig. 2 is an isometric view of the housing of the washing machine according to the present invention.
Fig. 3 represents the exploded view of the cut out maintenance cover and the housing according to the present invention.
Fig. 4 represents the exploded view of the inversion of the maintenance cover and the housing according to the present invention.
Fig. 5 is an isometric view of a portion of the maintenance cover after the asymmetric holes are punched according to the present invention.
Fig. 6 is an isometric view of a portion of the maintenance cover after the expanded and inverted maintenance cover is assembled to the back panel according to the present invention.

### Detailed Description of the Figures

In this detailed description, the subject matter is explained with references to examples without forming any restrictive effect only in order to make the subject more understandable.

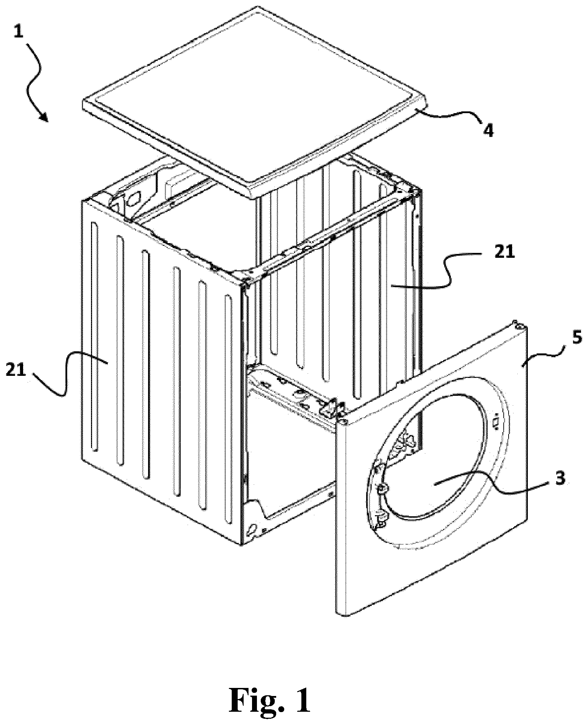

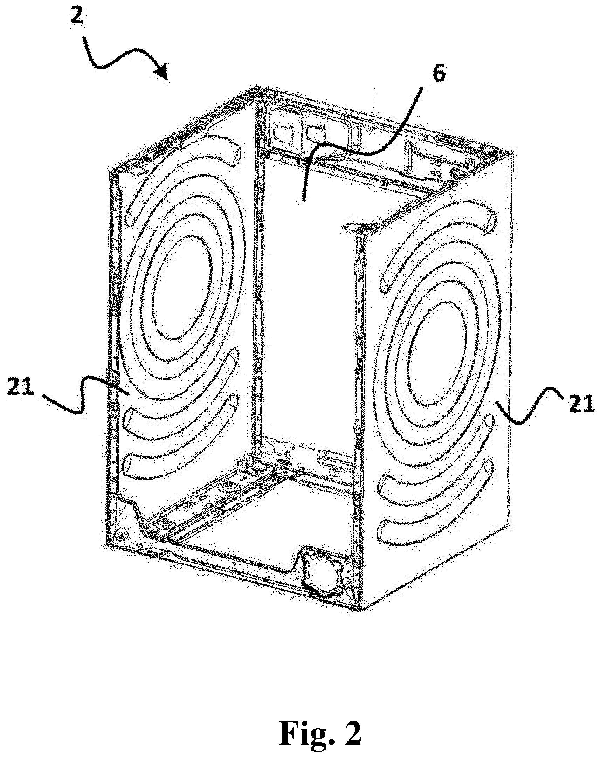

As shown in the Fig.1 and Fig.2, the washing machine (1) comprises a housing (2) forming the exterior of the machine and houses inner mechanic parts such as tub, drum and pumps (parts are not shown on the figures). The housing (2) furthermore comprises a front panel (5), side panels (21), a back panel (6), a top cover (4) and a base (not shown). Items which are to be washed are loaded into the drum through a load opening (3) provided on the front panel (5) of the housing (2). A door (not shown) is configured to seal the load opening (3). The door (not shown) is arranged for opening and closing when clothes are introduced to or retrieved from the washing machine (1) and is preferably hinged to the front panel (5).

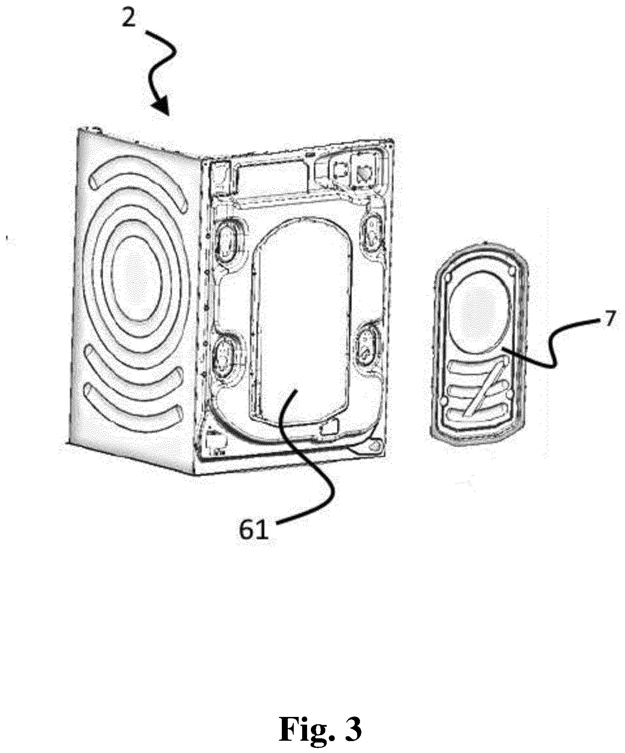

Fig. 3 shows the cut out process of the maintenance cover (7) from back panel (6) of the washing machine (1). Before the maintenance opening (61) created, asymmetric holes (71) on the maintenance cover (7) of the washing machine (1) are punched. At least three asymmetric holes (71) are punched on the maintenance cover (7). Preferably, 3 to12 asymmetric holes (71) are punched on the maintenance cover (7). The asymmetric holes (71) are punched at an equal distance to one another.

Then, the maintenance opening (61) is created by cutting out a piece of the back panel (6) of the housing (2). This cut out piece is to be reused as the maintenance cover (7) for accessing the interior of the washing machine (1). The maintenance cover (7) is extended by using press expansion process for assembling to the back panel (6) of the washing machine (1). The thickness of the maintenance cover (7) is between 0.70 mm - 0.88 mm. Preferably, the thickness of the maintenance cover (7) is 0.88 mm. The material of the maintenance cover (7) is metal.

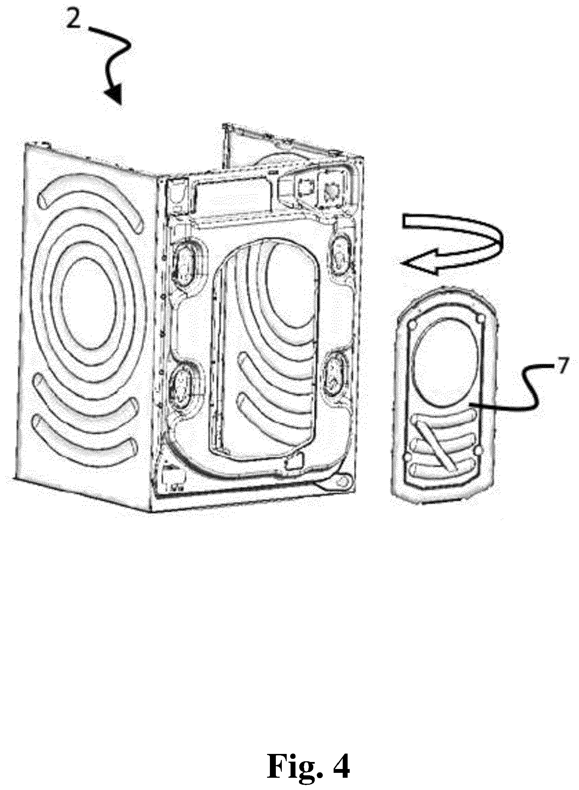

In Fig. 4, the cut out and expanded maintenance cover (7) is inverted and assembled to the washing machine (1) for covering the maintenance opening (61) of the back panel (6) of the washing machine (1). By the press expansion process, the asymmetric holes (71) also change shape and extend. Therefore, the asymmetric holes (71) of the maintenance cover (7) overlap and pair to the connection points (62). The connection points (62) previously exist on the back panel (6) before the manufacturing method, which is disclosed in this invention, is applied. As the final step, the maintenance cover (7) is assembled to the back panel (6). The assembly of maintenance cover (7) to the back panel (6) is provided by means of screwing.

After the press expansion process of the maintenance cover (7), the size of the asymmetric holes (71) on the maintenance cover (7) corresponds to the connection points (62) on the back panel (6). The asymmetric holes (71) and the connection points (62) can be any shape and size.

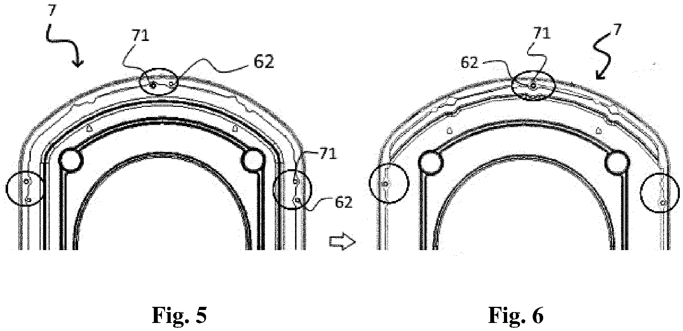

Fig.5 and Fig. 6 show the comparison between the location of the asymmetric holes (71) and the connection points (62) on the back panel (6) before and after the expansion, inversion and assembly of the maintenance cover (7).

Fig. 5, shows the manufacturing step of punching asymmetric holes (71) on the back panel of the washing machine (1). The connection points (62) on the back panel (6) of the washing machine (1) is already provided.

Fig. 6, shows the manufacturing step after the maintenance cover (7) is cut out front the back panel (6), extended through press expansion process, inverted and assembled on the back panel (6). The maintenance opening (61) is now covered with the maintenance cover (7). The asymmetric holes (71) which are also extended through the press expansion are now matching and overlapping on the connection points (62) on the back panel (6). The connection points (62) and the asymmetric holes (71) are combined together by means of screwing.

### Reference List

- 1: Washing Machine
- 2: Housing
21 Side panels
- 3: Load Opening
- 4: Top cover
- 5: Front panel
- 6: Back panel
61 Maintenance opening
62 Connection point
- 7: Maintenance cover
71 Asymmetric hole

## Claims

1. A method for manufacturing a washing machine (1) comprising the steps of:
- Punching asymmetric holes (71) on the back panel (6) of the washing machine (1)
- Cutting out a maintenance cover (7) from the back panel (6) of the washing machine (1) for providing a maintenance opening (61), wherein the material of the maintenance cover (7) is metal
- Extending the maintenance cover (7) by using press expansion process for assembling to the washing machine (1)
- Inverting the extended maintenance cover (7) for covering the maintenance opening (61) of the washing machine (1)
- Pairing the asymmetric holes (71) of the expanded maintenance cover (7) to connection points (62) on the back panel (6).

2. The method for manufacturing a washing machine (1) according to claim 1, wherein the connection of the maintenance cover (7) to the back panel (6) is provided by means of screwing.

3. The method according to claim 1, wherein at least three asymmetric holes (71) are punched on the maintenance cover (7).

4. The method according to claim 1, wherein asymmetric holes (71) are punched at an equal distance to one another.

5. A washing machine (1) **characterized in that**; the washing machine (1) is manufactured by using the method according to claim 1.

6. The washing machine (1) according to claim 5, wherein the asymmetric holes (71) are any size and shape.

## Patentansprüche

1. Verfahren zum Herstellen einer Waschmaschine (1), das folgende Schritte umfasst:
- Stanzen von asymmetrischen Löchern (71) in die Rückwand (6) der Waschmaschine (1),
- Ausschneiden einer Wartungsklappe (7) aus der Rückwand (6) der Waschmaschine (1) zum Bereitstellen einer Wartungsöffnung (61), wobei es sich bei dem Material der Wartungsklappe (7) um Metall handelt,
- Vergrößern der Wartungsklappe (7) für das Montieren an die Waschmaschine (1) durch Einsatz eines Pressdehnprozesses,
- Umdrehen der vergrößerten Wartungsklappe (7) zum Abdecken der Wartungsöffnung (61) der Waschmaschine (1),
- Zusammenbringen der asymmetrischen Löcher (71) der vergrößerten Wartungsklappe (7) mit Verbindungspunkten (62) an der Rückwand (6).

2. Verfahren zum Herstellen einer Waschmaschine (1) nach Anspruch 1, wobei das Verbinden der Wartungsklappe (7) mit der Rückwand (6) durch Schrauben erfolgt.

3. Verfahren nach Anspruch 1, wobei mindestens drei asymmetrische Löcher (71) in die Wartungsklappe (7) gestanzt werden.

4. Verfahren nach Anspruch 1, wobei in gleichmäßigem Abstand zueinander asymmetrische Löcher (71) eingestanzt werden.

5. Waschmaschine (1), **dadurch gekennzeichnet, dass** die Waschmaschine (1) mithilfe des Verfahrens nach Anspruch 1 hergestellt wird.

6. Waschmaschine (1) nach Anspruch 5, wobei die asymmetrischen Löcher (71) von beliebiger Größe und Form sind.

## Revendications

1. Procédé de fabrication d'une machine à laver (1) comprenant les étapes de :
- perforation de trous asymétriques (71) sur le panneau arrière (6) de la machine à laver (1),
- découpe d'un capot de maintenance (7) à partir du panneau arrière (6) de la machine à laver (1) pour fournir une ouverture de maintenance (61), dans lequel le matériau du capot de maintenance (7) est du métal,
- élargissement du capot de maintenance (7) au moyen d'un processus d'élargissement à la presse pour l'assembler à la machine à laver (1),
- inversion du capot de maintenance élargi (7) pour recouvrir l'ouverture de maintenance (61) de la machine à laver (1),
- association des trous asymétriques (71) du capot de maintenance élargi (7) à des points de raccordement (62) sur le panneau arrière (6).

2. Procédé de fabrication d'une machine à laver (1) selon la revendication 1, dans lequel le raccordement du capot de maintenance (7) au panneau arrière (6) est réalisé au moyen d'un vissage.

3. Procédé selon la revendication 1, dans lequel au moins trois trous asymétriques (71) sont perforés sur le capot de maintenance (7).

4. Procédé selon la revendication 1, dans lequel des trous asymétriques (71) sont perforés à égale distance l'un de l'autre.

5. Machine à laver (1) **caractérisée en ce que** la machine à laver (1) est fabriquée en utilisant le procédé selon la revendication 1.

6. Machine à laver (1) selon la revendication 5, dans laquelle les trous asymétriques (71) sont d'une dimension et d'une forme quelconque.
